# EUROPEAN PATENT APPLICATION

(11) **EP 2 669 123 A1**
(43) Date of publication of application: **04.12.2013**
(21) Application number: 13168430.0
(22) Date of filing: 20.05.2013
(51) Int. Cl.: B60S 1/02, B60S 1/60, B60S 1/66

(54) **Cleaning apparatus**

(30) Priority: 31.05.2012 GB 201209650
(71) Applicant: Nissan Motor Manufacturing (UK) Ltd., Cranfield Bedfordshire MK43 0DB (GB)
(72) Inventor: Webb, Michael, Cranfield, Bedfordshire MK430DB (GB)

(57) **Abstract**

A cleaning apparatus for use with the external surface of a vehicle, the cleaning apparatus comprising at least one barrier layer having a transparent covering portion that at least partially covers the external surface when the apparatus is fitted to the vehicle and when the barrier layer is in a protective position; a displacement means capable of displacing the barrier layer away from the protective position; and a cleaning means arranged to clean at least a portion of the barrier layer when the barrier layer is displaced away from the protective position.

## Description

### Field of the invention

The present invention relates to a cleaning apparatus, and in particular a cleaning apparatus for use with external vehicle surfaces, such as, for example, those of external lights and mirrors. The present invention also extends to a protective apparatus for use with an external vehicle surface.

### Background to the invention

External vehicle surfaces are inherently exposed to environmental factors such as rain, snow, mud, road water and other sources of dirt, which can lead to a build-up of dirt and grime over time. This build up of grime is particularly problematic on surfaces such as external vehicle lights, for example headlights, rear lights, indicators and brake lights, as it can result in a reduced intensity of emitted light, resulting in reduced visibility of the vehicle. Similarly, build up of dirt and grime on external mirrors can adversely affect the driver's view. Furthermore, contamination on external surfaces of vehicle sensor systems such as lane departure sensors and around view monitors (AVMs) can adversely affect functionality of the sensors.

This problem is noted especially in countries that experience particularly cold climates, and that are prone to snow and ice. As the snow and ice melts it generates a large quantity of water, and poor drainage on roadways often results in this water remaining on the roadway surface. This surface water is often contaminated with dirt from road surfaces, and with chemicals such as antifreeze, which leave sticky residues that encourage dirt to cling to surfaces. As vehicles drive through the surface water it is sprayed upwards onto surrounding vehicles in particular, coating external surfaces, including the external lights and mirrors with, dirt and chemicals.

Conventionally, external vehicle surfaces such as lights, mirrors and sensors are cleaned by vehicle owners. This is cumbersome, requiring purchase and storage of cleaning fluids that quickly runs out. As a result, many vehicle owners clean the vehicle lights and mirrors infrequently, and drive for long periods of time in dangerous road conditions with insufficient lighting. Additionally, some territories restrict the use of cleaning fluids due to environmental concerns, which limits where and when such external vehicle surfaces can be cleaned by the vehicle owner.

There have been some attempts to mitigate this problem. For example, patent application GB19927623A to Lorimer describes a system for cleaning headlights in which strips of material are arranged over the headlight. The strips of material move around the external surface of the headlight as the vehicle moves, and remove dirt as they do so. Such strips have limited capability for removing dirt, and are ineffective under the extreme road conditions previously described.

Patent application DE4316958A1 discloses a wiper system for a vehicle headlight having a variable length wiper blade. However, in practice, such wiper systems clean the headlight only to a limited extent. Furthermore, during use of the wiper system, cleaning fluid leaks onto the road, exacerbating the problem caused by chemicals in surface water.

It is one objective of the present invention to overcome or mitigate the above-mentioned problems.

### Statements of the invention

According to one aspect of the invention, there is provided cleaning apparatus for use with an external surface of a vehicle, the cleaning apparatus comprising at least one barrier layer having a transparent covering portion that at least partially covers the external surface when the barrier layer is in a protective position and when the apparatus is fitted to the vehicle; a displacement means for displacing the barrier layer away from the protective position; and a cleaning means for cleaning at least a portion of the barrier layer when the barrier layer is displaced away from the protective position.

The covering portion of the invention provides an effective means of protecting the external surface of the headlight from a build up of dirt and other contaminants, and the displacement means and cleaning means provide an arrangement that allows the vehicle user to clean the covering portion with minimal effort.

So as to avoid contamination of the displacement means and the cleaning means, when the apparatus is fitted to the vehicle the displacement means and the cleaning means are preferably located within a body of a vehicle supporting the external vehicle surface.

To allow cleaning of the barrier layer to be performed within the vehicle body, the displacement means is preferably arranged to displace at least the covering portion of the barrier layer to a position within the body of the vehicle.

Preferably, the displacement means is powered by a motor. To facilitate use of the apparatus, the motor is preferably operable by a vehicle user from within a vehicle cabin.

To allow for efficient cleaning of the barrier layer, the displacement means may be capable of displacing the barrier layer in two opposed directions relative to the protective position.

Preferably, the displacement means comprises at least one rotatable roller coupled to an end of the barrier layer, such that rotation of the roller effects displacement of the barrier layer away from the protective position. Using a roller coupled to an end of the barrier layer in this way allows the barrier film to be wound onto the roller, thereby minimising the space required by the apparatus.

The displacement means may comprise two rotatable rollers, each being coupled to a respective one of opposed ends of the barrier layer. Using two rollers allows the barrier film to be unwound from one roller and wound onto another roller, further minimising the space required by the apparatus.

To minimise the space required by the cleaning means, and to maximise efficiency of the apparatus, the cleaning means may comprise at least one rotatable brush for cleaning the barrier layer.

Preferably, the or each roller is arranged proximal to a rotatable brush, and the barrier layer is sandwiched between a roller and a rotatable brush. In this way, forces acting on the barrier layer are minimised, so as to avoid damage to the barrier layer. In a particularly preferred embodiment, rotation of the or each roller effects rotation of the respective rotatable brush. This avoids the need for an additional motor to rotate the or each rotatable brush.

For the purposes of efficient and effective cleaning of the barrier layer, the apparatus may comprise at least one container for a fluid and a respective one of the rotatable brushes is at least partially submerged within the fluid. Preferably, the or each rotatable brush is capable of transferring fluid from the respective fluid container to an external surface of the barrier layer.

To circulate the fluid within the apparatus, the apparatus preferably includes a pump arranged to pump fluid to and remove fluid from the or each fluid container. In this way, fluid that contains dirt from the barrier layer can be removed from the fluid container, and fresh fluid can be introduced.

Preferably, the apparatus further includes a filter arranged to filter fluid pumped by the pump. In this way, dirt and contaminants in the fluid can be removed by the filter, avoiding the need for frequent changing of the fluid in the apparatus. To minimise the space required by the device, the filter may be incorporated into the fluid pump.

To facilitate removal and cleaning or exchange of the filter, the filter may be removably attachable to the apparatus, to allow for replacement of the filter.

So as to allow any part of the barrier to act as a covering portion, the entire barrier layer may be transparent. Preferably, multiple portions of the barrier layer can act as a covering portion. For ease of manufacture of the barrier layer, the barrier layer is preferably made of a single piece of transparent material.

Preferably, when the apparatus is fitted to the vehicle surface and the barrier layer is in the protective position, the covering portion completely covers the external vehicle surface. In this way a single barrier film covers the external vehicle surface.

According to a second aspect of the invention, there is provided protective apparatus for an external surface of a vehicle, the protective apparatus comprising at least one barrier layer having first and second transparent covering portions, each being arranged to at least partially cover the external vehicle surface when the barrier layer is in first and second protective positions respectively and when the apparatus is fitted to the vehicle, and a displacement means for displacing the barrier layer from the first protective position to the second protective position.

The covering portions of this second aspect provide an effective means of protecting the external surface of the headlight from a build up of dirt and other contaminants, and the displacement means provides an arrangement that allows the vehicle user to exchange a used covering portion for a fresh covering portion with minimal effort.

To allow for replacement of the barrier layer when all the covering portions have been used, the barrier layer is preferably removable from the apparatus.

The barrier layer is preferably a continuous transparent layer. In this way, the barrier layer can provide multiple protective portions.

So as to avoid contamination of the displacement means, when the apparatus is fitted to the vehicle, the displacement means is preferably located within a body of the vehicle.

To allow the used portions of the barrier layer to be stored within the vehicle body, the displacement means is preferably arranged to displace a used covering portion of the barrier layer to a position within the body of the vehicle.

To facilitate use of the protective apparatus, the displacement means may be powered by a motor. Preferably, the motor is operable by a vehicle user from within a vehicle cabin.

Preferably, the displacement means comprises at least one rotatable roller coupled to an end of the barrier layer, such that rotation of the roller effects displacement of the barrier layer from the first protective position to the second protective position. Using a roller coupled to an end of the barrier layer in this way allows the barrier film to be wound onto the roller, thereby minimising the space required by the apparatus.

The displacement means may comprise first and second rotatable rollers, each being coupled to a respective one of opposed ends of the barrier layer when the apparatus is fitted to the vehicle. Using two rollers allows the barrier film to be unwound from one roller and wound onto another roller, further minimising the space required by the apparatus.

To facilitate replacement of the barrier layer, the barrier layer may be provided within a cartridge. The cartridge is preferably insertable into and removable from the protective apparatus.

Preferred and/or optional features of the first aspect of the invention may also be incorporated within the second aspect of the invention, and vice versa, alone or in appropriate combination.

### Brief description of the drawings

In order that the invention may be more readily understood, reference will now be made, by way of example, to the accompanying drawings, in which:
Figure 1 is a plan view of a cleaning apparatus of an embodiment of the present invention from the front;
Figure 2 is a plan view of the cleaning apparatus of Figure 1 from the side;
Figure 3 is a plan view of the fluid system of the cleaning apparatus of Figure 1 from the side; and
Figure 4 is a plan view from the side of a protective apparatus according to a further aspect of the invention.

### Detailed description of the embodiments of the invention

The cleaning apparatus 10 is intended to be fitted to a vehicle for use in cleaning an external surface 12 of the vehicle. The external vehicle surface 12 may be any surface of the vehicle that requires frequent cleaning, such as the surface of an external vehicle light such as a headlight, indicator or brake light, the surface of an external mirror such as a wing mirror, or the external surface of a sensor, such as a lane departure sensor or an around view monitor (AVM). The external vehicle surface 12 is exemplified here as the external surface of a headlight that is mounted to a vehicle trim 14 of the main body of the vehicle.

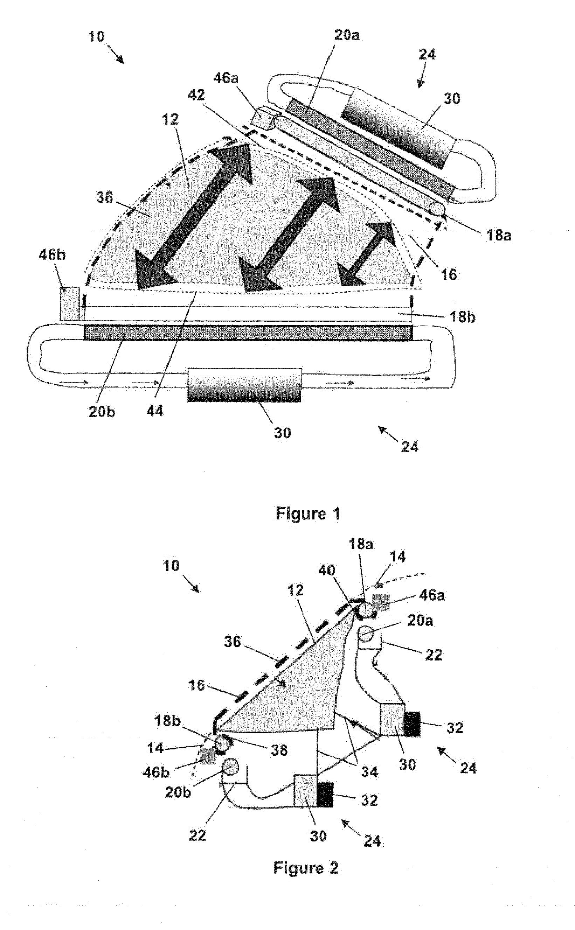

Referring to Figures 1 and 2, the cleaning apparatus 10 includes a barrier layer 16, one or more displacement means 18, and one or more cleaning means 20. The apparatus also includes a fluid container 22, and a fluid pump system 24 that includes inlet and outlet pipes 26, 28, a pump 30 and a cartridge filter 32.

As best seen in Figure 2, the apparatus 10 is attached to the headlight by supporting brackets 34. When fitted for use with a headlight, at least a portion of the barrier layer 16 is arranged externally of the headlight. The remaining components are arranged within the vehicle body and behind the headlight.

The barrier layer 16 is exemplified here as a film, and may be, for example, a thin film made from plastics. The film may, for example, be made from a thermoplastic that is substantially chemically inert such as polyurethane, acrylic, polyethylene terephthalate (PET), or polycarbonate. The film 16 is initially arranged in a protective position in which the film 16 extends over the headlight, such that at least a portion of the film 16 forms a covering portion 36 that covers the external surface of the headlight 12. In this way, the film shields the headlight from the dirt and chemicals of the surrounding environment, so that an external surface of the covering portion 36 is exposed to the surrounding environment, in place of the external surface of the headlight 12. As a result, contamination builds up on the external surface of the covering portion 36, instead of on the external surface of the headlight 12.

The displacement means 18, exemplified as rollers, are attached to the film 16, and are arranged to displace the film 16, and thereby the covering portion 36, away from the protective position. In this example, the film 16 is displaced on to rollers 18a, 18b located behind the headlight and within the vehicle body.

The cleaning means 20, exemplified as brushes, are arranged behind the headlight and proximal to the film 16. Each brush 20 is located within its own fluid container 22. As the covering portion 36 is displaced away from the protective position, the brushes 20a, 20b are employed to clean the film 16. The fluid pump system 24 provides fluid to the container 22 for use in cleaning the film 16. The fluid pump system 24 also removes fluid from the container 22 and filters the fluid so that it can be re-circulated for further use. Once the film 16 has been sufficiently cleaned, the displacement means 18 may return the covering portion 36 to the protective position.

The film 16 is transparent, so as to allow light to pass through with minimum possible reduction in its intensity. In this way, the apparatus is suitable for use with surfaces that must reflect light, such as external mirrors, or surfaces through which light must pass, such as external vehicle lights. The film 16 is also flexible, to allow for bending in order to facilitate its displacement.

The width of the film 16 is at least equal to the width of the headlight. As best shown in Figure 2, the film 16 is elongate, extending both above and below the headlight, so that the total length of the film 16 is greater than the height of the headlight. When for use with a headlight, the film 16 passes between the headlight and the vehicle trim 14 that surrounds the headlight, so that the film 16 extends into the vehicle body. In this way, only the covering portion 36 is located on the outside of the vehicle. The remainder of the film 16 is located behind the vehicle trim 14 and headlight, and hence within the interior of the vehicle body.

The elongate film 16 has upper and lower ends 38, 40 that are wound around the rollers 18a, 18b. The rollers 18a, 18b are positioned behind the headlight and vehicle trim 14 so as to be housed within the vehicle body and protected from the external environment. More specifically, and as best shown in Figure 2, the headlight is of triangular cross section, with one roller (the upper roller 18a) located at the upper apex thereof, and the other roller (the lower roller 18b) being located at the lower apex thereof. The third apex faces the vehicle body, together with the upper apex. The upper end 40 of the film 16 is attached to and wound around the upper roller 18a, and the lower end 38 of the film 16 is attached to and wound around the lower roller 18b.

An advantage of this positioning of the rollers 18a, 18b is that, in use, the film 16 is pulled tightly against the external surface 12 of the headlight. This minimises the possibility of dirt working its way between the film 16 and the headlight, so as to reduce the chance of contaminating the external surface 12 of the headlight.

The rollers 18a, 18b are substantially cylindrical in shape, and capable of rotating freely about their longitudinal axes. The rollers 18a, 18b align with the upper and lower edges of the head light 42, 44, and the length of the rollers 18a, 18b is at least equal to the width of the film 16. The upper and lower ends 38, 40 of the film 16 may be attached to the respective rollers 18a, 18b by any suitable means, for example by means of an adhesive layer.

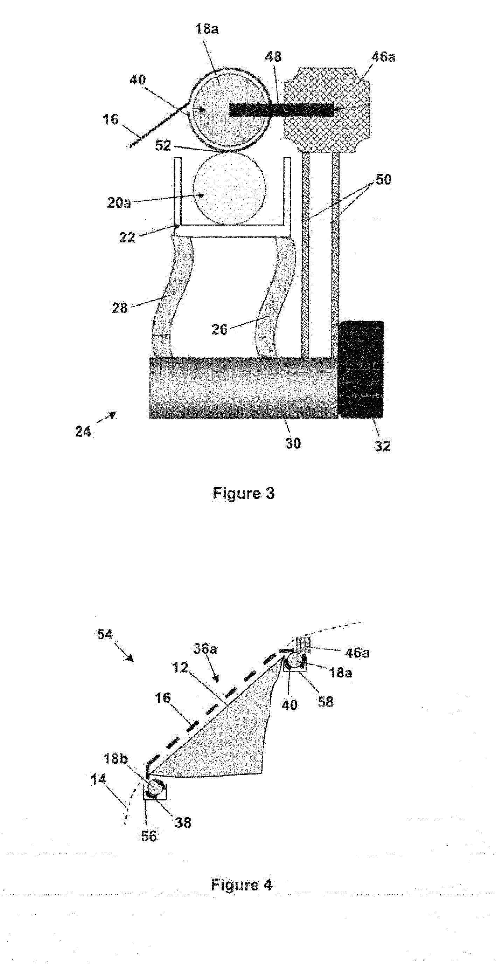

Rotation of the rollers 18a, 18b is powered by one or more motors 46a, 46b, which are connected to the rollers via a drive connector 48 (Figure 3). The motors 46a, 46b are supported by supporting struts 50, which are connected to the pump 30. The motors 46a, 46b are electrically connected to a user control in the vehicle cabin (not shown), so that the vehicle user can control the cleaning apparatus 10 and initiate the cleaning process when desired.

The rollers 18a, 18b rotate so that the film 16 is wound onto, or unwound from, each of the rollers 18a, 18b respectively. The internal surface of the film 16 in contact with the roller 18, and the external surface of the film 16 facing outward form the roller 18.

By rotation of the rollers 18, the film 16, and therefore the covering portion 36, can be displaced in an 'upward' or a 'downward' direction relative to the protective position of the covering portion 36. For example, with reference to Figure 2, in order to displace the film 16 in an 'upward' direction, the rollers 18a, 18b rotate clockwise, so that the film 16 is unwound from the lower roller 18b, and wound onto the upper roller 18a. Conversely, to displace the film 16 in a 'downward' direction the rollers 18a, 18b rotate anticlockwise, so that the film 16 is wound onto the lower roller 18b, and unwound from the upper roller 18a.

It will be appreciated that in order for the film 16 to be displaced in an 'upward' direction, a sufficient length of the film 16 must be wound around the lower roller 18b in order for it to be unwound to the extent required. To enable the covering portion 36 to be completely displaced away from the protective position (that is, so that no part of the covering portion 36 covers the headlight, and the entire covering portion 36 is positioned behind the vehicle trim 14), a portion of the film 16 having a length at least equal to the height of the headlight must be wound around the lower roller 18b when the film 16 is in the protective position.

Similarly, in order for the film 16 to be displaced in a 'downward' direction, a portion of the film 16 having a length at least equal to the height of the headlight must be wound around the upper roller 18a when the film 16 is in the protective position. Thus, for the film 16 to be capable of being completely displaced away from the protective position in both an upward and a downward direction relative to the initial protective position, the length of the film 16 must be at least three times the height of the headlight.

In the embodiment described, the cleaning means 20 is provided in the form of roller brushes that are of substantially cylindrical construction, and arranged to rotate around their longitudinal axes. Each brush 20 is arranged proximal to a roller 18, such that the longitudinal axis of each brush 20 aligns with the longitudinal axis of its respective roller 18. When the apparatus 10 is fitted for use with the headlight, the brushes 20a, 20b are located behind the headlight and the vehicle trim 14 so as to be housed within the vehicle body, thereby avoiding contamination of the brushes 20a, 20b with materials from the surrounding environment. The brushes 20a, 20b are made from a microfibre material to increase absorption of water, and to avoid damage to the film 16.

The fluid container 22 associated with each brush 20 is a substantially rectangular box that is open at its upper surface. The brush 20 protrudes through the open upper surface, and is arranged such that an upper side 52 of the brush 20 is in contact with a portion of the external surface of the film 16. During use, the container 22 is filled with fluid via the fluid pump system 24, to be more fully described. The level of fluid in each fluid container 22 is such that at least a portion of the brush 20 is situated within the fluid, so that fluid can be absorbed by the fibres of the brush 20 when the fibres reside within the container 22.

As best shown in Figure 3, each brush 20 and its respective roller 18 are arranged such that the film 16 is sandwiched between them. Put another way, the external surface of a portion of the film 16 is in contact with a brush 20, and the opposed internal surface of that same portion is in contact with its respective roller 18. In this way, tensile forces on the film 16 are minimised during the cleaning process. Each roller 18 and its respective brush 20 are of lengths that are at least as great as the width of the film 16, so as to ensure that the entire width of the film 16 is sandwiched between the roller 18 and the brush 20.

Referring to the upper roller 18a and the upper brush 20a shown in Figure 3, as the roller 18a rotates, friction between the film 16 on the roller 18a and the brush 20a causes the brush 20a to rotate. For example, if the upper roller 18a of Figure 3 were to rotate in a clockwise direction, the upper brush 20a would rotate in an anticlockwise direction. In this way, rotation of the brush 20a is effected by rotation of the roller 18a without the need for an additional motor. In a preferred embodiment, the length of the roller 18a is equal to the length of the brush, so as to promote effective rotation of the brush 20a whilst minimising the size of the cleaning apparatus 10.

Rotation of each brush 20 firstly moves the fibres across the external surface of the film 16, so as to clean the film 16. Rotation of each brush 20 also transfers water and cleaning fluid from its respective container 22 to the external surface of the film 16, and returns dirt from the external surface of the film 16 to the fluid, so that dirt does not built up on the brush 20.

The fluid pump system 24 that provides fluid to the fluid container 22 is best seen in Figure 3. The fluid pump system 24 comprises the pump 30, the inlet and outlet pipes 26, 28, and the cartridge filter 32. Fluid, including water and cleaning chemicals, is stored within the fluid system 24. In use, fluid is pumped into the fluid container 22 by the pump 30 through an inlet pipe 26, and removed from the fluid container 22 through an outlet pipe 28.

The cartridge filter 32 is attached to the pump 30 such that fluid circulating in the system must pass through the cartridge filter 32. The cartridge filter 32 removes particles of dirt and other contaminants from the fluid, so that the fluid can be recycled for further cleaning of the film 16 when required. The cartridge filter 32 is easily removable from the fluid pump system 24, so as to allow replacement of the cartridge filter 32 when required.

In use, the cleaning apparatus 10 is fitted for use with the headlight by means of the support brackets 34, with the film arranged externally of the vehicle body, and the other components of the apparatus arranged internally within the vehicle body. The film 16 is initially arranged in the protective position, such that the covering portion 36 covers the external surface 12 of the headlight. To utilise the cleaning apparatus 10, the vehicle user activates the motors 46a, 46b via a control within the vehicle cabin.

Referring to Figure 2, an upper motor 46a rotates the upper roller 18a in a clockwise direction so as to displace the covering portion 36 of the film upward and away from the protective position. As the upper roller 18a is rotated, the film is wound onto the upper roller 18a, with the external surface of the film 16 facing outward, and tension in the film 16 causes the film 16 to unwind from the lower roller 18b. Thus, the film 16 is displaced from its protective position, such that the initial covering portion 36 is upwardly displaced between the headlight and the vehicle trim 14, into the vehicle body and onto the upper roller 18a. The covering portion 36 is replaced by a fresh portion of the film 16 that has been unwound from the lower roller 18b.

As the film 16 is wound around the upper roller 18a, the rotation of the roller 18a causes rotation of the upper brush 20a, which moves fibres across the external surface of the film 16 to clean the covering portion 36. The user control also activates the pump 30 so as to pump fluid that contains water and cleaning chemicals around the fluid pump system 24 and into the fluid container 22 through the inlet pipe 26. The fluid is absorbed by the upper brush 20a, and the rotation of the brush 20a moves fluid from the fluid container 22 to the film 16 to facilitate cleaning.

The roller brush 20a also returns dirt and other contaminants to the fluid in the container 22, and the pump 30 removes fluid through the outlet pipe 28. The returned fluid passes through the cartridge filter 32 to remove dirt and other contaminants. The pump 30 continually circulates fluid throughout the fluid container 22 and the fluid pump system 24, so as to allow for efficient cleaning of the film 16.

When the cleaning process is complete, a lower motor 46b rotates the lower roller 18b, so that the film 16 is wound onto the lower roller 18b and unwound from the upper roller 18a, and returned to the initial protective position where the now-clean covering portion 36 is arranged to cover the headlight.

In an alternative aspect of the invention, the cleaning means, fluid container, and fluid pump system are omitted from the apparatus. This aspect is shown in Figure 4, in which like numerals are used to denote like parts to those described previously. In this aspect, protective apparatus 54 is provided that includes a barrier layer 16, such as the film previously described, and a displacement means 18a, 18b, such as the rollers previously described. The protective apparatus 54 is intended to be fitted to a vehicle for use in cleaning an external surface 12 of the vehicle.

As with the first aspect of the invention, the external surface 12 may be any surface of the vehicle that requires frequent cleaning, and is exemplified here as the external surface of a vehicle headlight. When fitted for use with a headlight, at least a portion of the film 16 is arranged externally of the headlight. The remaining components of the protective apparatus 54 are arranged within the vehicle body and behind the headlight.

The film 16 is initially arranged in a first protective position in which the film 16 extends over the headlight, such that at least a portion of the film 16 forms a first covering portion 36a that covers the external surface 12 of the headlight. In this way, the film 16 shields the headlight from the dirt and chemicals of the surrounding environment, so that an external surface of the first covering portion 36a is exposed to the surrounding environment, in place of the external surface 12 of the headlight. As a result, contamination builds up on the external surface of the first covering portion 36a, instead of on the external surface 12 of the headlight.

The displacement means 18a, 18b, exemplified as rollers, are attached to the film 16, and are arranged to displace the film 16, and thereby the first covering portion 36a, away from the first protective position to a second protective position. In the second protective position a different portion of the film 16 forms a second covering portion (not shown) that covers the external surface 12 of the headlight and shields the headlight from the dirt and chemicals of the surrounding environment, so that an external surface of the second covering portion is exposed to the surrounding environment.

If the film 16 provides further covering portions in addition to the first and second covering portions, the displacement means 18a, 18b can be used to displace the film 16 away from the second protective position to one or more further protective positions. For example, if the length of the film 16 is ten times the height of the headlight, the film 16 can provide ten covering portions, and can be moved between ten different protective positions.

As in the first aspect, the elongate film 16 has upper and lower ends 38, 40 that are wound around the rollers 18a, 18b. The rollers 18a, 18b are positioned behind the headlight and vehicle trim 14 so as to be housed within the vehicle body and protected from the external environment. The upper end 40 of the film 16 is attached to and wound around the upper roller 18a, and the lower end 38 of the film 16 is attached to and wound around the lower roller 18b. The upper and lower ends 38, 40 of the film 16 may be attached to the respective rollers 18a, 18b by any suitable means, for example by means of an adhesive layer.

Rotation of the rollers 18a, 18b is powered by a motor 46a. The motor 46a is electrically connected to a user control in the vehicle cabin (not shown), so that the vehicle user can control the protective apparatus 54 and initiate the movement of the film from one protective position to another when required.

In the first protective position, the majority of the film 16 is wound around the lower roller 18b. To displace the film 16 to the second protective position, the upper roller 18a is rotated such that the film 16, and therefore the first covering portion 36a, is wound onto the upper roller 18a and unwound from the lower roller 18b, such that the film 16 is moved into the second protective position. To move the film 16 to further protective positions, the upper roller 18a is rotated further, and the film 16 is further wound onto the upper roller 18a and unwound from the lower roller 18b.

Once all of the covering portions have been used, and the film 16 is arranged in a final protective position, the majority of the film 16 will be wound onto the upper roller 18a, and will be unwound from the lower roller 18b. The film 16 can then be removed, and replaced with a fresh film 16.

In this aspect of the invention, the film 16 need only be displaced in one direction. Therefore, the motor 46a need only be provided on one of the rollers 18a, 18b. For example, as shown in Figure 4, the motor 46a is provided on the upper roller 18a, so that the film can be displaced in an upward direction. To displace the film in the upward direction the motor 46a rotates the upper roller 18a in a clockwise direction, such that the film 16 is wound onto the upper roller 18a.

The film 16 may be provided in the form of one or more cartridges 56, 58. For example, two cartridges 56, 58 may be provided with each film. The first cartridge 56 may be provided proximal to the lower roller 18b, and may include the film 16. The second cartridge 58 may be provided proximal to the upper roller 18a, and may be arranged to receive the film 16, so that when the film 16 is wound onto the upper roller 18a, it is received within the second cartridge 58.

It should be appreciated that various modifications and improvements can be made without departing from the scope of the invention as defined in the claims.

For example, the cleaning means in Figures 1 to 3 need not be roller brushes, but may be fixed brushes. It will be appreciated that in any of the embodiments the film may, for example, be displaced from side to side, rather than upwards and/or downwards, depending on the location and position of the rollers and their respective motors.

In the embodiment shown in Figures 1 to 3, the cleaning apparatus includes two cleaning means; one associated with each roller. However, the apparatus may include only one cleaning means, for example associated only with the upper roller. In this case the film would be displaceable only in an upward direction. If the apparatus includes more than one cleaning means, each fluid container may be supplied by a separate fluid pump system, or a single fluid pump system may serve multiple cleaning means.

The film described is made from a single piece of transparent material, such that the entire film is transparent. In this case, any portion of the film could act as a covering portion. However, it need not be the case that the entire film is transparent. For example, only a portion of the film may be transparent, and this portion may correspond to a single covering portion. Additionally, or alternatively, the film may not be attached to the displacement means directly, but may be attached by an intermediary attachment means.

The covering portion may not cover the entire headlight when the apparatus is fitted for use with the headlight. Instead, the covering portion may partially cover the headlight, and multiple films arranged side-by side, or multiple apparatuses arranged side-by-side, may be used to completely cover the headlight.

## Claims

1. Cleaning apparatus (10) for an external surface (12) of a vehicle, the cleaning apparatus comprising:
at least one barrier layer (16) having a transparent covering portion that at least partially covers the external surface (12) when the barrier layer (16) is in a protective position and when the apparatus is fitted to the vehicle;
a displacement means (18) for displacing the barrier layer (16) away from the protective position; and
a cleaning means (20) for cleaning at least a portion of the barrier layer when the barrier layer (16) is displaced away from the protective position.

2. The cleaning apparatus (10) of claim 1, wherein, when the apparatus is fitted to the vehicle, the displacement means and the cleaning means are located within a body of the vehicle.

3. The cleaning apparatus (10) of claim 2, wherein the displacement means (18) is arranged to displace at least the covering portion of the barrier layer to a position within the body of the vehicle.

4. The cleaning apparatus (10) of any preceding claim, wherein the displacement means is powered by a motor (46).

5. The cleaning apparatus (10) of claim 4, wherein the motor (46) is operable by a vehicle user from within a vehicle cabin.

6. The cleaning apparatus of any preceding claim, wherein the displacement means (18) is capable of displacing the barrier layer (16) in two opposed directions relative to the protective position.

7. The cleaning apparatus (10) of any preceding claim, wherein the displacement means (18) comprises at least one rotatable roller (18) coupled to an end of the barrier layer (16), such that rotation of the roller effects displacement of the barrier layer away from the protective position.

8. The cleaning apparatus (10) of claim 7, wherein the displacement means (18) comprises at least two rotatable rollers (18a, 18b), each being coupled to a respective one of opposed ends of the barrier layer (16).

9. The cleaning apparatus (10) of claim 7 or claim 8, wherein the cleaning means (20) comprises at least one rotatable brush (20) for cleaning the barrier layer (16).

10. The cleaning apparatus (10) of claim 9, wherein the or each roller (18a, 18b) is arranged proximal to a rotatable brush (20), and wherein the barrier layer (16) is sandwiched therebetween.

11. The cleaning apparatus (10) of claim 10, wherein rotation of the or each roller (18a, 18b) effects rotation of the respective rotatable brush.

12. The cleaning apparatus (10) of any one of claims 9 to 11, further comprising at least one container for a fluid (22) and wherein, when in use, a respective one of the rotatable brushes (18a, 18b) is at least partially submerged within the fluid of the respective container.

13. The cleaning apparatus (10) of claim 12, wherein the or each rotatable brush (18a, 18b) is capable of transferring fluid from the respective fluid container to an external surface of the barrier layer.

14. The cleaning apparatus (10) of claim 12 or claim 13, wherein the apparatus further includes a pump (24) arranged to pump fluid to and remove fluid from the or each fluid container (22).

15. Protective apparatus for an external surface of a vehicle, the protective apparatus comprising:
at least one barrier layer (16) having first and second transparent covering portions, each being arranged to at least partially cover the external vehicle surface when the barrier layer is in first and second protective positions respectively and when the apparatus is fitted to the vehicle; and
a displacement means (18) for displacing the barrier layer from the first protective position to the second protective position.
